Europäisches Patentamt

European Patent Office

Office européen des brevets

(19)

(11) **EP 0 769 135 B1**

(12) **FASCICULE DE BREVET EUROPEEN**

(45) Date de publication et mention
de la délivrance du brevet:
**18.04.2001 Bulletin 2001/16**

(21) Numéro de dépôt: **96903079.0**

(22) Date de dépôt: **09.02.1996**

(51) Int Cl.[7]: **G01H 3/12**

(86) Numéro de dépôt international:
**PCT/FR96/00217**

(87) Numéro de publication internationale:
**WO 96/24825 (15.08.1996 Gazette 1996/37)**

(54) **CAPTEUR DE GRADIENT DE PRESSION ACOUSTIQUE**

AKUSTISCHER DRUCKGRADIENT SENSOR

ACOUSTIC PRESSURE GRADIENT SENSOR

(84) Etats contractants désignés:
**DE ES GB IT**

(30) Priorité: **10.02.1995 FR 9501579**

(43) Date de publication de la demande:
**23.04.1997 Bulletin 1997/17**

(73) Titulaire: **GIAT INDUSTRIES**
**78000 Versailles (FR)**

(72) Inventeur: **DURAND, Didier**
**F-82370 Campsas (FR)**

(56) Documents cités:
**DE-A- 4 210 214**     **GB-A- 2 151 879**
**GB-A- 2 186 154**     **SU-A- 1 157 462**

• **JOURNAL OF THE ACOUSTICAL SOCIETY OF AMERICA, vol. 97, no. 4, 1 Avril 1995, pages 2227-2237, XP000511466 GABRIELSON T B ET AL: "A SIMPLE NEUTRALLY BUOYANT SENSOR FOR DIRECT MEASUREMENT OF PARTICLE VELOCITY AND INTENSITY IN WATER"**

**Description**

Le domaine technique de la présente invention est celui des capteurs de pression acoustiques sensibles à l'amplitude et à la direction du front de l'onde sonore incidente.

Les capteurs acoustiques classiques, tels les microphones à pression ou à gradient de pression, fournissent une tension analogique (scalaire) dont l'intensité est le résultat de la somme des contributions de chaque source sonore présente dans la zone de détection considérée.

Un microphone comporte toujours une partie mécano-acoustique qui assure la conversion de l'énergie acoustique en énergie mécanique et une partie électromécanique qui assure la conversion de l'énergie mécanique en énergie électrique.

Ainsi, on connaît un brevet SU-A-1 157 462 décrit un accéléromètre constitué d'un élément sensible fixé par un cadre à l'intérieur d'une sphère creuse constituée d'une partie périphérique en métal reliée au support et d'une partie interne piézo-électrique. Les parties mécano-acoustique et électromécanique sont donc confondues et le capteur délivre une seule valeur scalaire image d'un gradient de pression acoustique.

On connaît également le brevet DE-A-4 210 214 décrivant un capteur destiné à mesurer la position d'un véhicule à l'aide d'accéléromètre comprenant chacun une sphère pleine constituant un élément essentiel et des capteurs de force répartis autour de la sphère. Le capteur décrit n'est pas un capteur de pression acoustique.

Suivant la bande passante recherchée et le milieu opérationnel (air, eau), les technologies employées sont très variées : micro électrodynamique, micro à condensateur, type électret par exemple, micro à charbon, micro piézoélectrique, micro à jauges de contraintes, micro polyvinyldifluoré (piézoélectrique).

On distingue deux types de capteurs :

- les capteurs à mesure de pression de l'onde incidente par rapport à la pression ambiante moyenne, et
- les capteurs à gradient de pression qui mesurent la différence de pression de l'onde de pression en deux points très proches.

On détermine difficilement la direction de la source sonore avec un capteur scalaire. Pour déterminer cette direction, on effectue généralement un balayage mécanique avec un micro directif. L'inconvénient de cette manière d'opérer réside dans l'inobservation de certains phénomènes puisque le capteur n'est réceptif que dans un seule direction à la fois.

Selon un autre processus, on groupe un certain nombre de micros suivant une figure géométrique donnée et on exploite les signaux reçus par des procédés faisant intervenir les déphasages entre signaux. On comprend dès lors que l'électronique nécessaire à cette installation devienne très importante.

Le but de la présente invention est de fournir un capteur de gradient de pression acoustique sensible en amplitude, et en direction aux champs extérieurs qui lui sont appliqués.

Un autre but de la présente invention est de proposer un capteur délivrant une information relative à l'ensemble des sources sonores de l'espace environnant.

L'invention a donc pour objet un capteur de gradient de pression acoustique apte à détecter un signal sonore engendré par une source sonore mettant en oeuvre une sphère creuse, caractérisé en ce qu'il comporte séparément :

- un moyen mécano-acoustique constitué de la sphère sensible de façon omnidirectionnelle au gradient de pression,
- un moyen électromécanique recevant le moyen mécano-acoustique destiné à transformer les efforts en impulsions électriques, et
- des moyens électroniques de conditionnement de ces impulsions pour délivrer une information de direction de la source sonore.

Selon un exemple de réalisation de l'invention, le moyen électromécanique est constitué de deux circuits imprimés comportant des amplificateurs faible bruit séparés par des poutres délimitant une structure triangulée, portant chacune une jauge de mesure des contraintes, et le moyen mécano-acoustique est constitué par une sphère en matériau synthétique de faible épaisseur, qui présente un diamètre environ dix fois inférieur à celui de la longueur d'onde du rayonnement sonore incident.

Le capteur comprend six poutres délimitant la structure triangulée, délivrant six tensions électriques contenant l'information de direction de la source sonore.

D'une manière générale, la sphère est par exemple collée dans un évidement circulaire de l'un des circuits imprimés, de préférence le circuit imprimé supérieur, le centre dudit évidement étant confondu avec le barycentre des points de contact entre les poutres et le circuit imprimé supérieur, le moyen électromécanique est par exemple fixé sur un support métallique par l'intermédiaire d'entretoises, l'ensemble étant isolé accoustiquement par une plaque de mousse synthétique. Les jauges de contraintes sont par exemple constituées par des barreaux de silicium et les poutres par des céramiques métallisées à leurs extrémités.

Un tout premier avantage de la présente invention réside dans le fait que le capteur est sensible de manière omnidirectionnelle aux gradients de pression.

Un autre avantage réside dans le fait que l'onde de pression arrivant sur la sphère produit une répartition du champ de pression à la surface de la sphère telle que la force résultante produit une vibration du centre de gravité de celle-ci, caractéristique de la direction de l'onde incidente.

D'autres caractéristiques et avantages apparaîtront à la lecture de complément de description donné à titre indicatif en relation avec des dessins sur lesquels :

- la figure 1 est une représentation schématique du capteur,
- la figure 2 illustrent les moyens électroniques de conditionnement des impulsions sur une poutre,
- la figure 3 est une illustration du développé sur 360° du moyen électromécanique.

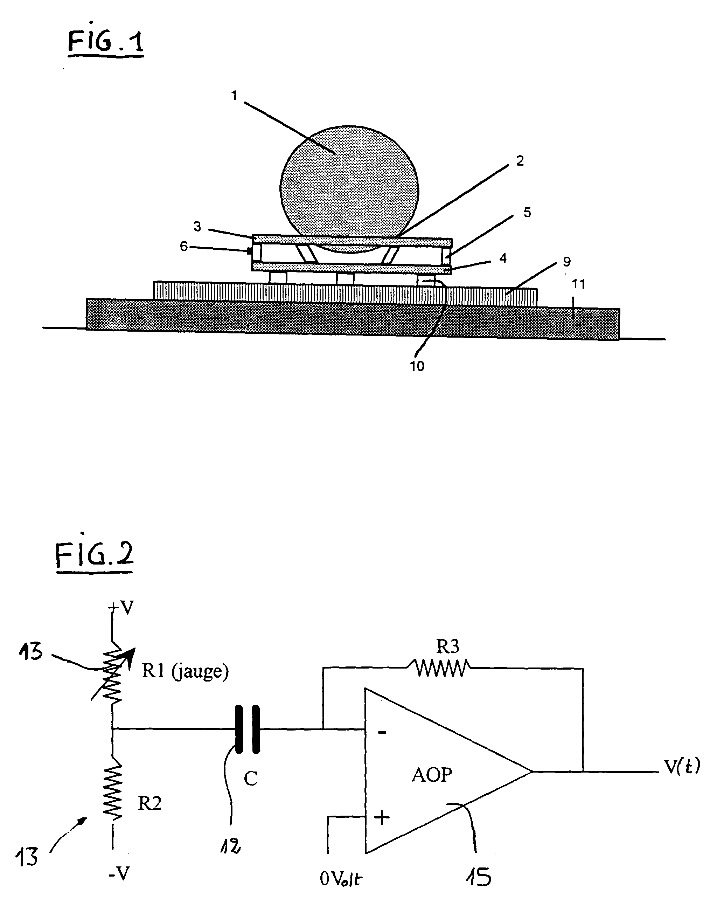

Le capteur représenté sur la figure 1 comprend une sphère 1 constituant l'essentiel du moyen mécano-acoustique. Cette sphère est composée d'un matériau synthétique du type fibre de carbone, polychlorure de vinyle (PVC), de verre, présentant une masse de l'ordre du gramme. L'épaisseur de la paroi de la sphère est faible de l'ordre de moins de 1/10 mm. Ces valeurs permettent de définir un capteur d'onde du domaine audiophonique dans l'air. De manière générale, la sphère 1 est choisie en fonction de l'onde de pression que l'on veut mesurer ou détecter et son diamètre est sensiblement dix fois plus petit que la longueur de l'onde . du rayonnement sonore en cause. Cette sphère est collée dans un évidement 2 d'un circuit imprimé supérieur 3. Ce circuit imprimé 3 est solidaire d'un circuit imprimé inférieur 4 de même nature, dotés de préamplificateurs à faible bruit. Avantageusement, ces préamplificateurs sont disposés sur le circuit imprimé inférieur. Entre ces deux circuits sont disposées six poutres 5, suivant une structure triangulée. Sur ces poutres 5, on colle une jauge de contrainte 6 constituée par un barreau de silicium. La poutre elle-même est par exemple réalisée en céramique métallisée à ses extrémités. La métallisation de la poutre sert de reprise électrique des jauges 6 et de fixation mécanique aux circuits imprimés. Le circuit imprimé inférieur 4 est par exemple équipé de six amplificateurs faible bruit et repose sur un support métallique 9 par l'intermédiaire d'entretoises 10. Le support 9 présente alors une forte inertie permettant de mesurer les efforts transmis par la sphère, ces efforts étant caractéristiques de l'onde acoustique. L'ensemble de ce capteur est alors isolé acoustiquement de l'environnement par exemple par une plaque 11, du type mousse synthétique.

La figure 2 montre un exemple de moyens électroniques de conditionnement associé à chaque poutre 5. Ils sont constitués d'un condensateur 12 en relation avec un premier circuit 13 incluant la résistance variable 14 représentant la jauge 6 et d'un amplificateur opérationnel 15 montré en amplificateur de filtre passe-haut comme monté sur le dessin. Cet amplificateur délivre une tension de sortie V(t) utilisée dans la matrice définie ci-après.

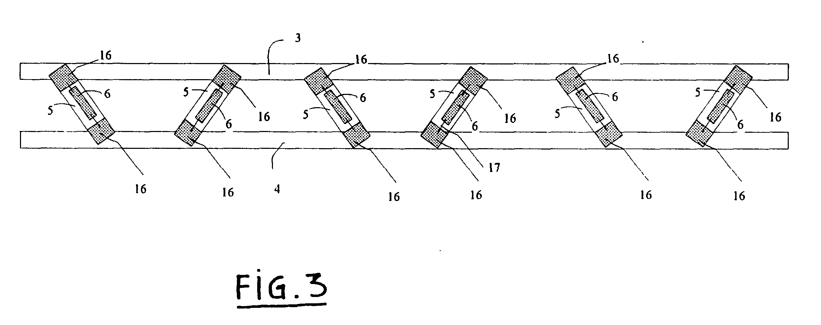

Le développé sur 360° des poutres 5 représenté sur la figure 3 montre la structure triangulée. Les poutres 5 de céramique reçoivent à leurs extrémités un revêtement métallique 16 qui permet de les souder sur les circuits imprimés 3 et 4. Chaque jauge 6 est collée sur la poutre correspondante, le circuit électrique étant fermé par les fils 17 reliant la jauge aux revêtements 16.

Le capteur ainsi réalisé fournit un vecteur de six tensions analogiques V(t) représentant la somme vectorielle de toutes les sources sonores de l'espace environnant. Ces six tensions contiennent les informations de direction de la source sonore, c'est-à-dire qu'après traitement comme indiqué ci-après on retrouve l'information de direction de cette source sonore. Dans le cas d'une onde sonore plane progressive (ou sphérique si la source est éloignée du capteur), la connaissance de la matrice de transfert [M] du capteur permet de calculer la direction en coordonnées sphériques D = f(r, q, j), où r est l'amplitude de l'onde sonore, q représente le site (0 à p) et j représente l'azimut (-p/2 à +p/2).

Lorsqu'une onde de pression frappe la sphère, la répartition du champ de pression à sa surface est telle que la force résultante produit une vibration du centre de gravité de celle-ci caractéristique de la direction de l'onde incidente. Cette force est alors transmise à la partie électromécanique grâce à la fixation rigide décrite ci-dessus. Puisque la fixation de la sphère n'englobe pas son centre de gravité une composante de moment apparaît. Les efforts sont transmis à la partie électromécanique par la sphère 1 et le support métallique 9 sert de référence statique de force en raison de sa forte inertie.

Les efforts transmis par la sphère 1 peuvent être représentés par un torseur T(t). Grâce à la structure triangulée des poutres, le torseur crée des contraintes de traction/compression au niveau des jauges qui engendrent des variations de résistance qui après conditionnement deviennent des tensions électriques V(t). Dans la bande passante du capteur liée au diamètre de la sphère, le torseur engendre une réponse vectorielle du type :

$$V(t) = [M] \times T(t)$$

où [M] est la matrice de transfert 6 x 6 du capteur. Connaissant V(t) qui est le vecteur fourni par les six jauges du capteur, on calcule le torseur :

$$T(t) = [M]^{-1} \; x \; V(t) = \begin{matrix} Tx(t) \\ Ty(t) \\ Tz(t) \\ Mx(t) \\ My(t) \\ Mz(t) \end{matrix}$$

M doit bien entendu être connu.

Une façon de connaître [M] et de procéder par un moyen d'identification sur banc d'essai. Dans cette technique, on soumet le capteur à une série de torseurs connus T(t). On applique ensuite la méthode des moindres carrés généralisés pour déterminer la matrice [M]. Comme le nombre d'essais peut être très supérieur à l'ordre de la matrice recherchée, on utilise la méthode de la pseudo-inverse :

$$[M] = [V^T \, V]^{-1} \, V^T \, .T$$

Les trois composantes du torseur Tx(t), Ty(t) et Tz(t) sont les trois composantes de force dans un repère cartésien lié au centre de gravité G de la sphère 1. A partir des valeurs de Tx(t), Ty(t) et Tz(t), on effectue un passage en coordonnées sphériques par les formules classiques de transformation.

Ce capteur trouve des applications dans la veille et la localisation acoustique, nécessitant un microphone vectoriel tel que décrit ci-dessus :

- mines intelligentes pour localisation et suivi de véhicules (camions, chars...),
- surveillance de locaux,
- détection et localisation de bancs de poissons,
- si le capteur est fixé sur un mobile, il peut aussi servir d'accéléromètre six axes (la sphère sert alors de masse sismique),
- utilisé en couple, il peut non seulement localiser, mais aussi estimer la distance de la source sonore.

## Revendications

1. Capteur de gradient de pression acoustique apte à détecter un signal sonore engendré par une source sonore mettant en oeuvre une sphère creuse (1), caractérisé en ce qu'il comporte séparément :

   - un moyen mécano-acoustique constitué de la sphère (1) sensible de façon omnidirectionnelle au gradient de pression,
   - un moyen électromécanique (3, 4, 5, 6) recevant le moyen mécano-acoustique destiné à transformer les efforts reçus en impulsions électriques, et
   - des moyens électroniques de conditionnement de ces impulsions pour délivrer une information de direction de la source sonore.

2. Capteur de gradient de pression acoustique selon la revendication 1, caractérisé en ce que le moyen électromécanique est constitué de deux circuits imprimés (3, 4) comportant des amplificateurs faible bruit séparés par des poutres (5) délimitant une structure triangulée, portant chacune une jauge (6) de mesure des contraintes.

3. Capteur de gradient de pression acoustique selon la revendication 1 ou 2, caractérisé en ce que le moyen mécano-acoustique est constitué par une sphère (1) en un matériau synthétique de faible épaisseur.

4. Capteur de gradient de pression acoustique selon la revendication 3, caractérisé en ce que la sphère (1) présente un diamètre environ dix fois inférieur à celui de la longueur d'onde du rayonnement sonore incident.

5. Capteur de gradient de pression acoustique selon l'une quelconque des revendications 2 à 4, caractérisé en ce qu'il comprend six poutres (5) délimitant la structure triangulée, délivrant six tensions électriques contenant l'information de direction de la source sonore.

6. Capteur de pression acoustique selon l'une des revendications 3 à 5, caractérisé en ce que la sphère (1) est collée dans un évidement circulaire (2) d'un des circuits imprimés (3, 4).

7. Capteur de gradient de pression acoustique selon la revendication 6, caractérisé en ce que la sphère est solidaire du circuit imprimé supérieur (3).

8. Capteur de gradient de pression acoustique selon la revendication 7, caractérisé en ce que le centre de l'évidement circulaire (2) est confondu avec le barycentre des points de contact entre les poutres(5) et le circuit imprimé (3).

9. Capteur de gradient de pression acoustique selon l'une quelconque des revendications précédentes, caractérisé en ce que le moyen électromécanique (4) est fixé sur un support métallique (9) par l'intermédiaire d'entretoises (10), l'ensemble étant isolé acoustiquement par une plaque (11) de mousse synthétique.

10. Capteur de gradient de pression acoustique selon la revendication 4 ou 5, caractérisé en ce que les jauges de contraintes (6) sont constituées par des barreaux de silicium et les poutres (5) par des céramiques métallisées à leur extrémités.

**Patentansprüche**

1. Akustischer Druckgradient Sensor, der durch eine Schallquelle erzeugte Schallsignale erkennen kann und mit einer Hohlkugel (1) versehen ist, dadurch gekennzeichnet, dass er:

   - ein maschinenakustisches Mittel enthält, das aus der empfindlichen Kugel (1) rundstrahlend zum Druckgradienten gebildet wird,
   - ein elektromechanisches Mittel (3, 4, 5, 6) enthält, das das maschinenakustische Mittel, durch das die Belastungen in elektrische Impulse umgewandelt werden, empfängt, sowie
   - elektronische Mittel zur Konditionierung dieser Impulse, um Informationen über die Richtung der Schallquelle zu liefern.

2. Akustischer Druckgradient Sensor nach Anspruch 1, dadurch gekennzeichnet, dass das elektromechanische Mittel aus zwei gedruckten Schaltkreisen (3, 4) gebildet wird, die durch Balken (5) getrennte und von einer aus Dreiecken gebildeten Struktur begrenzte rauscharme Verstärker tragen, von denen jeder einen Dehnungsmessstreifen (6) trägt.

3. Akustischer Druckgradient Sensor nach Anspruch 1 oder 2, dadurch gekennzeichnet, dass das maschinen-akustische Mittel durch eine Kugel (1) aus synthetischem Material von geringer Dicke gebildet wird.

4. Akustischer Druckgradient Sensor nach Anspruch 3, dadurch gekennzeichnet, dass die Kugel (1) mit einem ca. zehn Mal geringeren Durchmesser als der der einfallenden Schallstrahlungswellenlänge ist.

5. Akustischer Druckgradient Sensor nach einem der Ansprüche 2 bis 4, dadurch gekennzeichnet, dass er sechs Balken (5) enthält, die die aus Dreiecken gebildete Struktur begrenzen, und sechs elektrische Spannungen liefert, die die Information über die Richtung der Schallquelle enthalten.

6. Akustischer Druck Sensor nach einem der Ansprüche 3 bis 5, dadurch gekennzeichnet, dass die Kugel (1) in eine runde Aussparung (2) eines der gedruckten Schaltkreise (3, 4) geklebt wird.

7. Akustischer Druckgradient Sensor nach Anspruch 6, dadurch gekennzeichnet, dass die Kugel mit dem oberen gedruckten Schaltkreis (3) verbunden ist.

8. Akustischer Druckgradient Sensor nach Anspruch 7, dadurch gekennzeichnet, dass das Zentrum der Aussparung (2) selbstverständlich mit dem Baryzentrum der Kontaktpunkte zwischen den Balken (5) und dem gedruckten Schaltkreis (3) verbunden ist.

9. Akustischer Druckgradient Sensor nach einem der oben angeführten Ansprüche, dadurch gekennzeichnet, dass das elektromechanische Mittel (4) durch ein Zwischenstück (10) auf einem metallischen Träger (9) befestigt ist, das Ganze ist durch eine Platte (11) aus synthetischem Schaum akustisch isoliert.

10. Akustischer Druckgradient Sensor nach Anspruch 4 oder 5, dadurch gekennzeichnet, dass die Dehnungsmess-streifen (6) aus Siliziumstäben gebildet werden und die Balken (5) an ihren Enden durch metallisierte Keramiken.


**Claims**

1. An acoustic pressure gradient sensor able to detect a sound signal produced by a sound source comprising a hollow sphere, characterised in that it comprises :

   - a mechanical-acoustic means formed of the sphere (1) which has omnidirectional sensitivity to the pressure gradient,
   - an electromechanical means (3, 4, 5, 6) which accommodates the mechanical-acoustic means intended to transform the stresses into electrical impulses, and
   - electronic means to process these impulses.

2. An acoustic pressure gradient sensor according to Claim 1, characterised in that the electromechanical means is formed of two printed circuits (3, 4) incorporating low noise amplifiers separated by beams (5) marking out a triangulate structure, each of which carries a gauge (6) to measure the stresses.

3. An acoustic pressure gradient sensor according to Claim 1 or 2, characterised in that the mechanical-acoustic means is formed of a sphere (1) made of a relatively thin synthetic material.

4. An acoustic pressure gradient sensor according to Claim 3, characterised in that the sphere (1) has a diametre approximately ten times less than that of the wave length of the incident sound radiation.

5. An acoustic pressure gradient sensor according to any one of Claims 2 to 4, characterised in that it comprises six beams (5) marking out the triangulate structure, producing six electric voltages containing the directional data of the source of sound.

6. An acoustic pressure gradient sensor according to one of Claims 3 to 5, characterised in that the sphere (1) is bonded in a circular recess (2) on one of the printed circuits (3, 4).

7. An acoustic pressure gradient sensor according to Claim 6, characterised in that the sphere is integral with the upper printed circuit (3).

8. An acoustic pressure gradient sensor according to Claim 7, characterised in that the centre of the circular recess (2) matches the centre of gravity of the points of contact between the beams (5) and the printed circuit (3).

9. An acoustic pressure gradient sensor according to any one of the above Claims, characterised in that the electromechanical means (4) is fastened on a metallic support (9) by means of braces (10), the assembly being acoustically insulated by a sheet (11) of synthetic foam.

10. An acoustic pressure gradient sensor according to Claim 4 or 5, characterised in that the stress gauges (6) are formed of bars of silicon and the beams (5) are formed of ceramic with metallized ends.

FiG.1

FiG.2

FIG.3

EP 0 769 135 B1